# EUROPEAN PATENT SPECIFICATION

(11) **EP 0 313 679 B1**
(45) Date of publication and mention of the grant of the patent: **15.05.1996**
(21) Application number: 87115843.2
(22) Date of filing: 28.10.1987
(51) Int. Cl.: A01D 34/73

(54) **Apparatus for cutting vegetation**
Vorrichtung zum Schneiden von Pflanzen
Appareil pour couper la végétation

(43) Date of publication of application: 03.05.1989
(73) Proprietor: White Consolidated Industries, Inc., Cleveland Ohio 44111 (US)
(72) Inventor: Collins, Imack L., Shreveport Louisiana 71129 (US); Stuart, Jerry E., Lake Havasu City Arizona 86403 (US)
(74) Representative: Klunker . Schmitt-Nilson . Hirsch

(56) References cited:
- FR-A- 2 429 550
- FR-A- 2 540 332
- FR-A- 2 551 039
- GB-A- 2 078 075
- US-A- 4 104 796
- US-A- 4 236 312
- US-A- 4 244 103
- US-A- 4 254 550
- US-A- 4 310 970
- US-A- 4 352 243
- US-A- 4 366 621
- US-A- 4 366 622

## Description

The present invention relates to a method of automatically feeding line from a rotating head vegetation cutting device according to the pre-characterizing part of claim 1 and a vegetation cutting apparatus according to the pre-characterizing part of claim 15 (corresponding to US-A-4,366,622).

Various types of devices have been proposed to facilitate the removal of vegetation by moving, trimming, edging and like cutting operations. In general, these devices have employed a metal blade to effect vegetation removal. Devices of this nature employ prime movers such as electric and gasoline motors. As a result, rotating metal blades can inflict serious and terrible injury upon the user.

In about 1960, there was developed in Europe a trimmer/edger unit employing a flexible polymeric line extending from a rotating head for cutting vegetation. This unit did not work properly because of several defects in structure and operating parameters. In the United States of America, practical vegetation cutting devices using flexible, non-metallic lines carried upon a rotating head were developed. The devices are shown in U.S. patents 3,708,967, 3,826,068, 3,859,776, 4,035,912, 4,052,789, 4,054,992 and 4,067,108. These patented devices have met with outstanding success in that these American developments provide safe electrical or gasoline-powered tools for vegetation cutting, edging and trimming operations.

The devices shown in the mentioned patents employ a flexible cutting line, such as manufactured from Nylon polymer. The cutting line is carried usually upon a spool internally of a rotating head. When desired to replenish the line or to extend an additional length of line, the rotation of the head was stopped and line manually extended from the spool. This line extension procedure in the patented devices has been found to be convenient, simple and reliable. In many of the more powerful devices, especially those powered by electric motors, a system to extend the cutting line from the head without interrupting cutting operations has long been sought.

A most desirable system would be one capable of feeding cutting line from the head automatically as need was incurred independent of any operator involvement. Structures directed toward this purpose are shown in U.S. Patents 3,895,440, 4,020,550 and 4,035,915. These structures have, in common, a basket weave supply of cutting line carried on the periphery of a disc with the line feeding from behind special post members. These post members have a cutting-abrading edge so that cutting line from the weave supply is bent about such edge in the free traveling end portion extending into the cutting plane. The combination function of the edge, line, angular speed, etc. is arranged so that the line posts with such edge sever the free end of the cutting line when it is worn to an ineffective length. In practice, these structures are found to waste about 25 percent of the cutting line because of the excessive length of line severed at the posts' edge, e.g., 3 inches.

According to FR-A-2,551,039, the spool member carrying a bobbin of the flexible line is rotatably supported by the rotating head and carries at its circumference a plurality of notches. A clamping member is carried by the head and is in the form of an intertia mass element pivotable around an axis parallel to the rotation axis of the head. A portion of said element which is substantially parallel to the axis of rotation of the element is forced by the flexible line into one of said notches of the spool member.

When the outer line end portion of the flexible line shortens, a centrifugal force urges said portion of the inertia element radially out of the engaged notch such that the spool member is rotated thereby paying out a portion of the flexible line corresponding to the circumferential distance beetween two adjacent notches of the spool.

According to the prior art apparatus, the amount of line payout corresponds to the circumferential distance of two adjacent notches of the spool member. This may or may not be the correct amount needed to reestablish the correct length of outer line end portion.

US 4,366,622 disclosed a rotating head vegetation cutting device in which the flexible line is wound around a cam surface of a two-arm-lever between said cam portion and an inner wall portion of the rotating head, to thereby pinch the line against said wall. Feeding of the line depends not only on a camming action as mentioned above, but also on the vibration of the cutting line during vegetation cutting which modulates the gripping members constituted by the cam mechanism into a pulsing gripping of the line (column 2, lines 32-42 of US-A-4,366,622).

The present invention provides a method according to claim 1 and an apparatus according to claim 15. The apparatus according to the invention comprises a rotating head with a mechanism that extends the cutting line to a suitable operating length whenever it is worn or severed to an undesirable lesser length without interrupting vegetation cutting or requiring independently imposed operator involvement.

The apparatus for cutting vegetation has a head rotatable about an axis of rotation. The head includes a cavity containing a supply of a flexible cutting line (preferably of a non-metallic monofilament material) including an outer line end portion that extends outwardly from the head through an aperture therein and is rotated by the head in a cutting plane projecting outwardly therefrom. The pull on the line extending from the head into the cutting plane resulting from centrifugal force is balanced against the Centrifugal force acting on a fixed or reference counterweight and the payout of replacement line is controlled by a mechanism responding to the imbalanced centrifugal forces. When no centrifugal force is present, i.e., the head is not rotating, line payout is prevented. When the reference force exceeds the line pull force, i.e., the head is rotating and the line is shorter than the desired length, the line is released for further payout. When the line pull force exceeds the reference force, i.e., the line is at the desired length or greater, additional line payout is prevented. If the head is rotating and the pull on the line subsequently falls below the counterbalance or reference force, i.e., the line is shorter than the desired cutting length, the line is again payed out until the desired length is attained. Any event which artificially increases the line pull, such as snagging of the line on a fence or the like, further overbalances the reference force, ensuring that no line is paid out. Thus, the only condition which allows line to extend is a shortening of the line. Since line is released only in response to a centrifugally generated force produced by rotation, the line cannot be extended during start-up. Because the system relies only on counterbalancing centrifugal forces, not spring forces, it is independent of rotational speed or direction of the head, making it suitable for use on both gasoline engines, and electric motor driven devices. Of course, as the line shortens, due to wear, there is a tendency to increase the rotational speed of the head, which increases the centrifugal force of the line and the reference mass as a square function.

In another embodiment, the imbalanced force is used to secure a spool upon which the line is wound against rotation, and thus prevent further payout.

In one embodiment of the invention, the imbalanced force is used to directly frictionally engage the line through a lever arrangement to prevent further line payout.

In accordance with a very important aspect of the invention, stability of operation is achieved by providing an enhanced, predictable drag force on the line as it is payed out to maintain full tension on the line at all times, thus ensuring that the centrifugal force on the line can be accurately sensed during all modes of operation. This may be considered as a controlled payout in which the rate of payout is limited so that at all stages during payout, a back tension or drag force substantially equal to the centrifugal force on the line is applied to the line as the line is payed out. Otherwise the line has no appreciable tension and the centrifugal force in the line cannot be accurately measured by sensing the tension in the line and using this measured force to terminate line payout.

In first and second embodiments, a pivotally supported balancing element is imbalanced to form a reference mass which is responsive to the centrifugal forces of rotation. The arm effects engagement and disengagement of a drag mechanism which functions to impose a controlled back-tension on the line for resisting uncontrolled extension of the line to both ensure that the tension in the line can be sensed at all times and to slow the rate of payout until the mechanism can properly lock the line against further extension at the desired length.

A still more specific aspect of the invention incorporated in the first and second embodiments thereof includes a spool within the head upon which the line is wound. A cam tooth arrangement forces the spool to reciprocate axially in response to centrifugal pull on the line. The force required to cause the spool to reverse directions provides a primarily inertial resistance to line payout which maintains full tension on the line during line payout. This allows the centrifugal force on the line to be sensed by the balance arm, and also slows the payout to enable the mechanism time to respond and stop the line at the appropriate length before excess line has payed out.

In the first embodiment, the pivotally supported balancing element is a balance arm which looks axial reciprocation of the spool, and thus rotation of the spool, to prevent line payout.

In the second embodiment, the pivotally supported balancing element is a balance beam which engages teeth formed on the periphery of the spool to directly prevent rotation of the spool.

In a third embodiment of the invention, a highly leveraged imbalanced pivot arm is used to pinch or grip the line. In this embodiment, the line is passed around a friction surface prior to passing over the pivot arm to ensure a minimum, controlled back force which is sufficient to ensure that the highly leveraged pivot arm, which functions as a force amplifier, will exert a frictional, sliding force to control payout by maintaining a sufficient lock tension on the line to overbalance the reference force when the line has reached the desired length so that the line can be locked.

### BRIEF DESCRIPTION OF THE DRAWINGS

Figure 1 is a pictorial view illustrating an electric motor driven embodiment of the apparatus for cutting vegetation arranged according to the present invention;
Figure 2 illustrates, in enlargement and partially broken away, the lower portion of the apparatus shown in Fig. 1;
Figure 3 is a cross-sectional view through the cutting head of another embodiment of the present apparatus taken along line 3-3 of Fig. 4;
Figure 4 is a cross-sectional view through the cutting head taken along line 4-4 of Fig. 3;
Figure 5 is a fragmentary view of a right hand portion of Fig. 4 illustrating a changed relative orientation of the components;
Figure 6 is a sectional view taken along the axis of the spool structure of the head of Fig. 3;
Figure 7 is a sectional view taken of a lower spool tooth cam of the device of Fig. 3 taken along line 7-7 thereof;
Figure 8 is a bottom view of the balancing arm of Figs. 3 and 4;
Figure 9 is a right side view of the balancing arm of Fig. 8;
Figure 10 is an isometric elevation of the balancing arm of Fig. 8;
Figures 11-14 are schematic representations of the sequential steps of operation of the tooth cams of the inertial brake of the present apparatus with the line spool being axially foreshortened for illustrative purposes;
Figure 15 is a bottom view of another cutting head embodiment of the present invention, with its lower cover portion removed and a lower circumferential portion of the hub being broken away for illustrative purposes;
Figure 16 is a sectional view taken along line 16-16 of Fig. 15 with the lower cutting head cover replaced;

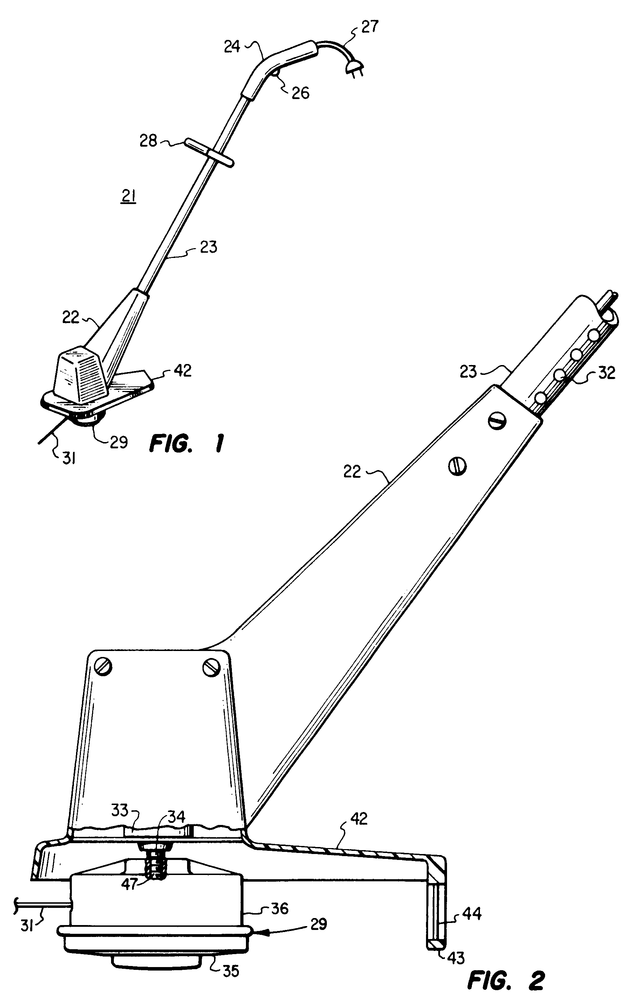

Referring to Fig. 1, there is shown an apparatus for cutting vegetation constructed in accordance with the present invention. For purposes of description the apparatus comprises a grass trimmer 21, but could be a lawnmower, edger or other device for vegetation cutting purposes. The trimmer 21 has a lower housing 22 interconnected by a tube 23 to a handle assembly 24. The assembly 24 provides a switch 26 for selectively applying electrical power received by a cord 27 to an electrical motor carried within the housing 22. For two-handed operation of the trimmer 21, an auxiliary handle 28 is provided upon the tube 23. The lower housing 22 carries a molded plastic head 29 rotatable about an axis passing through the housing 22 and the cutting line 31 extends into a cutting plane which is substantially perpendicular to the axis of rotation of the head.

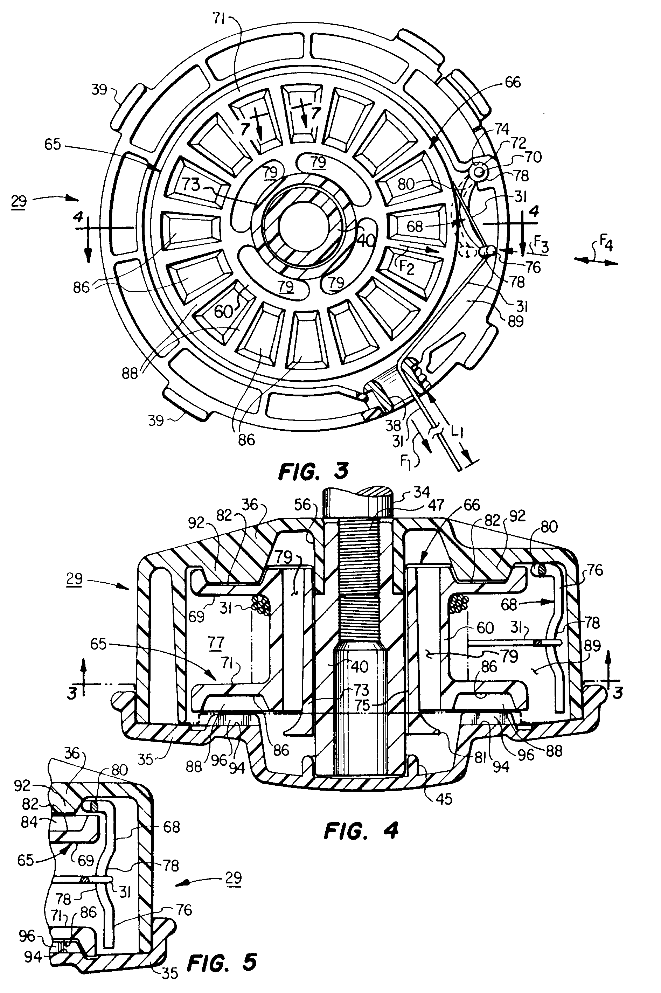

In Fig. 2, there is shown an enlargement of the housing 22 carrying a plurality of air induction openings 32 for introducing a flow of cooling air over a motor 33 contained in the housing 22. The motor 33 has a downwardly-extending drive shaft 34 to which the head 29 is threadedly connected. The upper surface of the head 29 may be surrounded by a plurality of vanes 37 serving as a centrifugal blower for moving air radially outwardly from the head 29 during its rotation. As a result, the induced flow of air cools the motor 33 within the housing 22.

Comprising head 29 is a hub 36 and a bottom cover 35, the former of which carries in its side peripheral surface an aperture 38 through which the cutting line 31 extends radially outward into the cutting plane. A smooth bearing surface at the aperture protects the line 31 against undue wear and breakages.

The housing 22 includes a rearwardly-extending tail part 42 which serves as a protection to the user to prevent inadvertent contact with the rotating cutting line 31. Also, the tail part provides an automatic limit to the extension of the cutting line 31 from the head 29. More particularly, the tail part 42 has a downwardly-extending projection 43 in which is embedded a metal cutting blade 44. As a result, the cutting line 31 when rotated in a cutting plane by the head 29 can never have an operating length extending beyond the cutting blade 44. Any initially greater length of cutting line is automatically severed by the blade 44.

Referring now to Figs. 3-5, the head 29 is threadedly secured to motor drive shaft 34 by means of a threaded lower stud portion 47 formed on the lower end of shaft 34. The hub 36 is adapted to interfit with the lower cover 35 by means of spring locking tabs 39 on the hub and complementary grooves (not illustrated) on the cover. An arbor 40 is axially threaded to receive stud 47 from the drive shaft 34 and is secured within the head between downwardly depending tubular cap post 56 in hub 36, and a shoulder formed on the arbor 40. The cover 35 has an annular lip 45 which receives the lower end of the arbor for stability. A line spool indicated generally by the reference numeral 65 contains a storage supply of cutting line 31 and is rotatably and reciprocably supported on arbor 40.

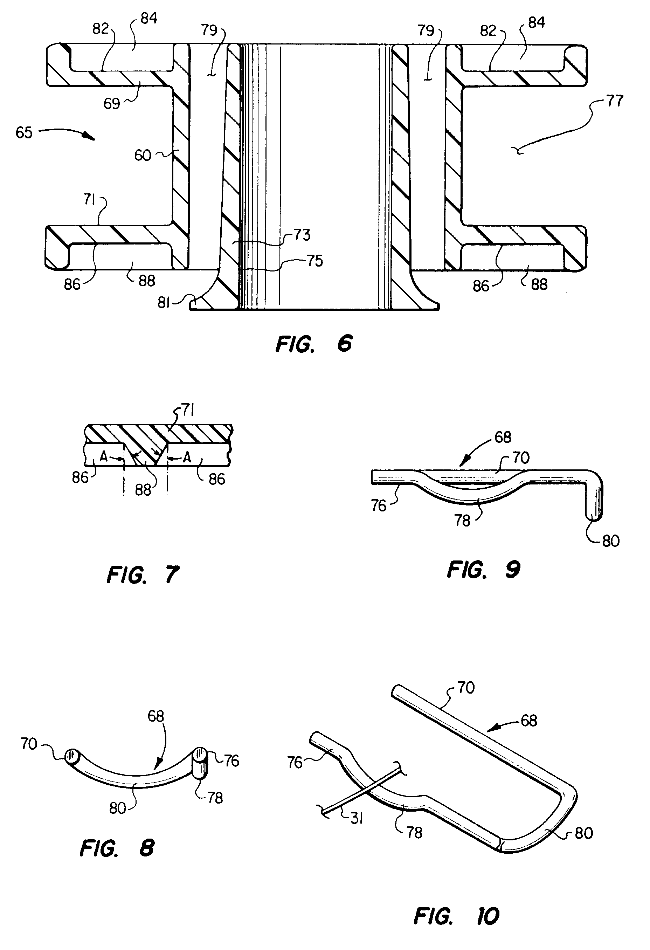

The head 29 is provided with what may be termed an inertial angular velocity governor which constitutes an important aspect of this invention. In a manner subsequently described, the governor maintains tension in the line 31 as it passes over a balance arm 68 to ensure that the tension in the line can be sensed by the balance arm. The balance arm 68, as best seen in Figs. 8-10, may be comprised of stiff wire bent into a more or less U-shape configuration. The arm is formed into an upstanding straight leg 70 and an opposite, generally parallel leg 76. Leg 70 is pivotally received in a sleeve 72 (Fig. 3) which, in turn, is friction fit in a vertical pocket 74 of the molded plastic hub 36. The opposite leg 76 includes an intermediate offset or bow 78 over which line 31 is routed from spool 65 to a line aperture 38. An arcuate section 80 interconnects the two vertical legs at the upper ends and is used to prevent reciprocation of the spool as hereafter described by becoming interposed between the hub and spool. As the head is rotated, centrifugal force will tend to urge the arm counterclockwise from the position shown in dashed outline in Fig. 3 (see Fig. 5 also), hereafter referred to as the line locked position, to the position which is shown in Fig. 3 in solid outline, hereinafter referred to as the released position (see Fig. 4 also). Countering the centrifugal force will be the force F₃, which is a vector function of the tension imposed on line 31 that is transmitted to leg offset 78 and which tends to urge arm 68 from the unlocked position to the locked position.

Spool 65, as will be described with specific reference to Figs. 3-7, is comprised of a tubular sleeve 73 having a central bore 75 adapted to be rotationally and reciprocably supported in a freely movable fit about arbor 40. The lower distal end of the sleeve 73 is enlarged to define a spool extraction knob 81 which permits a user to conveniently remove the spool from the head for servicing. Joined to the sleeve is a drum 60 that includes annular concentric flanges 69 and 71 between which is formed an intervening cavity 77 for containment of a wound supply of coiled line 31. Formed in the top surface of flange 69 is a plurality of uniformly spaced chamfered recesses 82 (see Figs. 4 and 11-14) which form intermediate each adjacent pair of recesses a slope sided tooth cam 84. Similarly formed in the underside of flange 71 are a plurality of similar recesses 86 defining intervening slope sided cam teeth 88 which are in a registered alignment with the upper cam teeth 84. Generally separating the sleeve 73 from the drum 60 (Figs. 3 and 6) are a plurality of arcuate axially extending recesses 79. Line 31 on drum 60 extends through peripheral hub cavity 89 for routing about the offset 78 of balancing arm 68 and their outwardly through aperture 38.

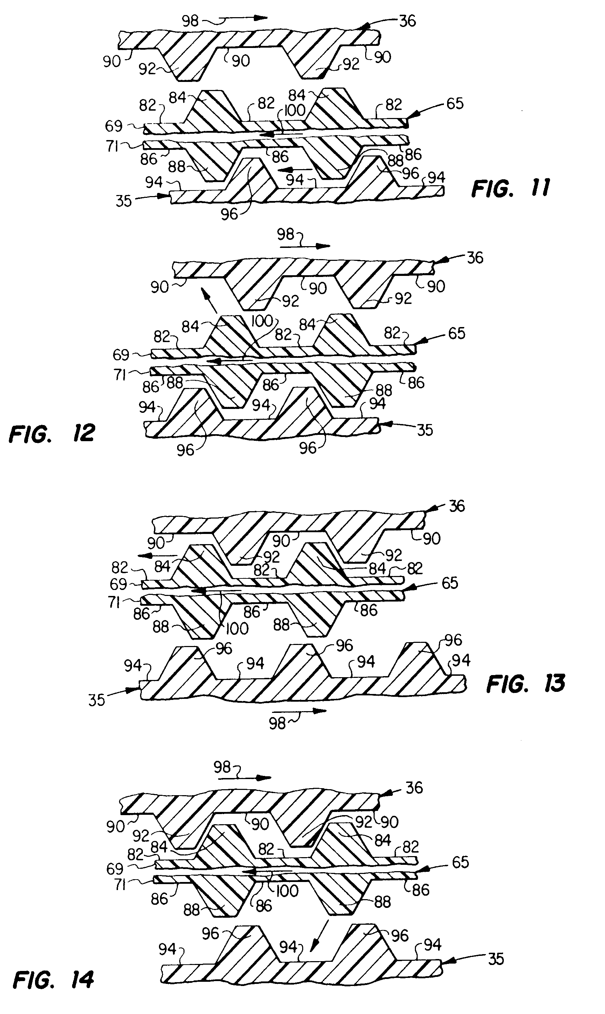

Spaced apart chamfered recesses 82, 86 and intervening slope sided cam teeth 84, 88 respectively of spool 65 are positioned to cooperate with recesses 90 (see Figs. 11-14) between cam teeth 92 formed on the underface interior of hub 36 and recesses 94 between cam teeth 96 formed on the inside surface of cover 35. While cam teeth 84 and 88 of the spool are intended to be aligned as previously mentioned, cam teeth 92 and 96 of the cover and hub respectively are intended to be relatively misaligned to effect axial reciprocation of the spool as will presently be described. The alignment and misalignment arrangement of the cam teeth could in the alternative be reversed or utilized in a combination thereof.

For understanding operation of the inertial angular velocity governor 66, it should be noticed in Fig. 7 that the profile of the cam teeth are symmetrically formed at a slope angle "A" so that lockup between cam teeth cannot occur in the course of engagement and disengagement. The angle "A" may for example be about 30 degrees which ensures a sliding condition between teeth in contact so that the opposing cam teeth will bias the spool axially alternatively upwardly and downwardly in sliding relationship. The sequence by which the opposing cam teeth engage and disengage can be best understood by following the repetitive sequence of operations schematically depicted in Figs. 11-14 as subsequently described. It will be presumed for purposes of discussion that cover 35 and hub 36 are rotating in the direction of arrow 98 and that the spool 65 is rotated by tension in the line 31 (during line payout) in a direction represented by arrow 100. As the spool 65 is urged by line tension resulting from centrifugal force to rotate in the direction 100, the upper and lower spool cam teeth 84 and 88 will alternatively operate between the opposing misaligned cam teeth 92 and 96 of hub and cover respectively, causing the spool to reciprocate axially.

The balancing arm 68 (Fig. 3) forms an imbalanced reference mass which is subject to the centrifugal force F₂ due to rotation which tends to cause a pivotal movement of the arm counterclockwise from the locked position shown in dashed outline in Fig. 3 to the unlocked position shown in solid outline. The counter force vector F₃ resulting from tension in the line 31 acts on arm 68 in a direction tending to pivot the arm clockwise from the unlocked position to the locked position. When the balance arm is in the locked position, the portion 80 of the arm is between the upper flange 69 of spool 65 and the hub 36 as shown in Fig. 5 and the spool cannot move upwardly and is locked by the interacting lower cam teeth 88 on the spool and the cam teeth 96 in the cover 35. When line is to be payed out, the centrifugal reference force F₂ produced by the imbalance reference mass of the pivoted arm 68 overcomes the counter force F₃ of the line acting on the arm 68 and the arm is pivoted outwardly beyond the circumference of upper spool flange 69, enabling vertical reciprocation of the spool and thus rotation of the spool to permit it to precisely and inertially control and retard line payout.

Beginning with the spool arrangement of Fig. 11, in which arm 68 is presumed to be in the unlocked position, the lower spool cam teeth 88 are bottomed out in cover recesses 94 for incremental rotation in the direction 100 until engagement with the next successive cam teeth 96 of the cover 35. As shown in Fig. 12, the cam teeth 88 will then slide upwardly along the mating sloping faces of cam teeth 96 until clear of cam teeth 96. As the spool reciprocates upwardly toward its position in Fig. 13, upper spool cam teeth 84 penetrate hub recesses 90 until cam teeth 88 have cleared cam teeth 96. By that time cam teeth 84 have rotationally advanced incrementally to the next succeeding cam teeth 92 on the hub 36 (Fig. 14). This sequence is repetitive as the cam teeth of spool 65 sequentially advance, engage and slide vertically. Consequently, as each spool cam tooth bottoms out and is arcuately displaced in the opposing hub or cover recess, the subsequent sliding displacement between mutually engaging cam teeth forces the spool in the opposite axially direction. The friction between the sliding cam teeth to some extent, but far more importantly, the energy required to accelerate the spool reciprocally along the axis ensures that a back or drag force is maintained on the line at all times, and the greater the line pull, the greater the force required to axially accelerate the spool, and the greater the back tension. This ensures that the tension in the line during payout is equal to that resulting from the centrifugal force on the line, at least on a high frequency, intermittent tension, so that this force producing tension in the line can be balanced against the centrifugal force action on the reference mass of the pivoted balanced arm.

For an understanding of the forces involved by which the spool 65 is activated and deactivated in the aforesaid manner, attention is again directed to Fig. 3 from which it will be appreciated that the tension force F₁ is that resulting from centrifugal force on the line 31 which is maintained by the fact that the spool is either secured against rotation, or retarded during line payout by the inertial and frictional effects produced by the interacting cam teeth. The force F₁ may be termed a "centrifugal payout force" in the line which tends to pull additional line outwardly from the head. The force F₄ represents the net difference between the vector force F₃ of the tension in line 31 and the centrifugal reference force F₂ on the reference mass of arm 68. In the relationship illustrated in Fig. 3, line 31 outward of aperture 38 is assumed to be at the predetermined maintained length L₁ such that for purposes of discussion, the tension counter force F₃ of line 31 being imposed on arm 68 exceeds the centrifugal force F₂ on the arm so that the net force F₄ is leftwardly directed as viewed in Fig. 3. The arm 68 is therefore in locked position to prevent reciprocation and therefore a rotation of the spool so that the spool 64 is locked to prevent payout of the line.

As the outwardly extended length of line 31 begins to wear, or should breakage of the line occur, the centrifugal payout force F₁ on the line 31 and therefore the counter force F₃ from the line will be reduced until the centrifugal reference force F₂ on the arm 68 overbalances the counter force F₃ of the line at which point the next force F₄ becomes rightwardly directed as viewed in Fig. 3 and the arm will pivot outwardly to release the spool. The spool is then accelerated axially first upwardly, then downwardly while maintaining a resistive drag or back tension force on the line. A particularly significant high back tension force is produced when successive cam teeth are engaged after short rotation and at the start of axial acceleration. This ensures that if the outwardly projecting line length is such as to cause the force F₃ to overbalance the centrifugal force F₂ on the arm, the arm will in fact be pivoted inwardly and again lock the spool to prevent further payout of the line. If not, the spool will continue to reciprocate, rotate and pay out line until the force F₃ of the line 31 moves the balance arm 68 to its inward locking position.

It is significant to note that the payout of the line 31 is essentially independent of the rotational speed of the head because any increase in centrifugal payout force F₁ on the line 31 due to a speed increase is counterbalanced by a corresponding increase in centrifugal reference force F₂ acting on the reference mass of the balance arm 68. Thus the device functions well on a unit driven by a gasoline engine, which due to rich fuel, fouled spark plugs or the like, may vary over a significant r.p.m. range, yet which does not tend to change r.p.m. due to line loss. Yet the device also functions on an electric powered unit where r.p.m. may increase substantially as the line 31 shortens. It is also important to notice that line 31 cannot payout while the head is stationary, because only rotation of the head causes the balance arm 68 to unlock the spool 65. Further, should the line 31 snag on a chain link fence or the like, the excessive force will always overcome the centrifugal force on the balance arm 68 and insure that the spool is locked against rotation.

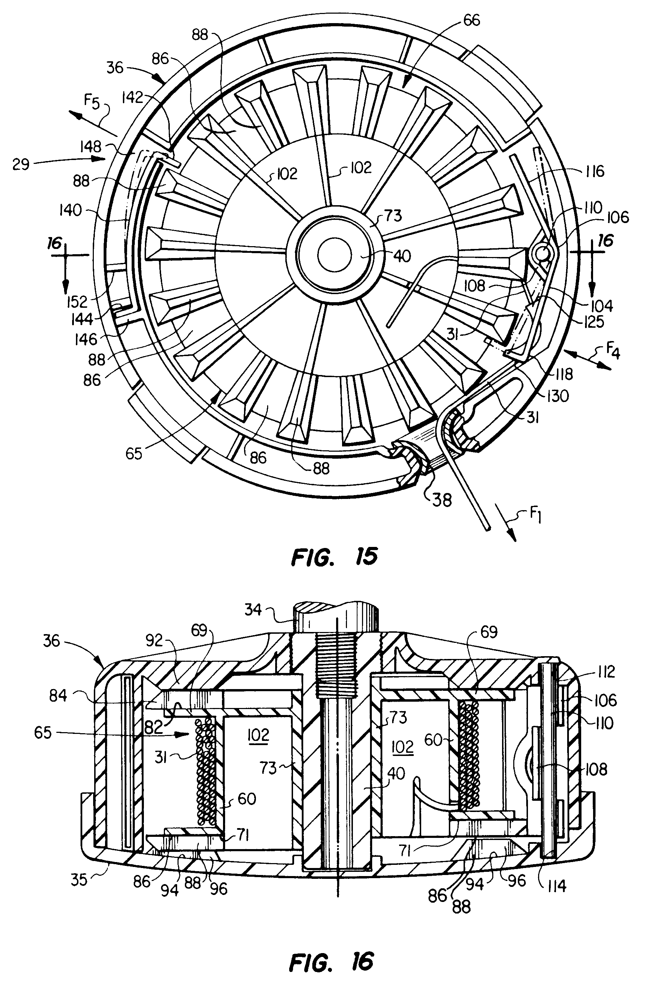

Another embodiment of the present invention is illustrated in Figs. 15 and 16. This embodiment is substantially the same as the embodiment just described, except that a balance beam 104 engages locking teeth on the periphery of the spool to lock and unlock rotation of the spool. For ease of illustration, the spool 65 in Fig. 16 is split along the axis and shown on the left side of the rotational axis in the lower reciprocal position of the spool with cam teeth 84 disengaged from hub cam teeth 92 while lower cam teeth 88 are engaged with the cover cam teeth 96 of cover 35. In contrast, the device on the right side of the rotational axis is shown with the cam teeth 84 in mesh with the hub cam teeth 92 while the lower cam teeth 88 are disengaged from the cover 35 cam teeth 96.

For this embodiment, the head 29 is similarly connected as before to the drive shaft 34 of the motor 33. Spool 65 likewise includes a drum 60 about which the line 31 is coiled between the flanges 69 and 71. The inertial drag brake 66 is produced by cam teeth 84 upstanding from the flange 69 and uniformly spaced thereabout with intervening arcuate spaces 82. The cam teeth 84 and 88 in this embodiment, rather than the recesses, are chamfered whereas the intervening recess as formed between adjacent cam teeth are unchamfered in contrast to the previous embodiment. Similarly, flange 69 includes the spacings 86 and cam teeth 88 aligned with cam teeth 84 for engaging the spacing 94 and cam teeth 96 in the cover 35. The sleeve 73 is connected to the drum 60 via a plurality of spokes 102.

The actuator for activating and deactivating the material drag brake in this embodiment is a stamped metal balance beam 104 centrally bent at 106 at an obtuse angle and split at 108 (Fig. 15) for mounting on a pivot shaft 110. The shaft 110 is supported within aligned recessed pockets 112 and 114 of the hub and cover respectively. The balance beam 104 includes a lighter weight first section 116 and a relatively heavier weighted second section 118 so that a net reference mass imbalance tends to cause the balance beam 104 to pivot in a counterclockwise direction when referring to Fig. 15 when the head is rotated. The second section 118 includes an inwardly protruding end 130 which engages locking teeth (defined by radially outer end portions of the spool cam teeth) protruding from the periphery of the spool and serves to lock the spool against rotation. The line 31 extends from the spool 65 through an aperture 125 then over a smoothly curved section leading the line over the end of the balance beam 104 before emerging from aperture 38 as before so that the tension in line 31 due to centrifugal forces of rotation produces a vector force component tending to pivot the balancing beam 104 clockwise about the axis of shaft 110 counter to the centrifugal force on the reference mass imbalance of the balance beam 104.

An elongated leaf spring 140 is offset oppositely at its ends 142 and 144 and is included herewith as an optional feature. The spring 140 is positioned on the opposite side of the head from the balance beam 104 to provide balance to the head. The leaf spring is secured via its end 144 in a pocket 146 of the hub 36 from where it extends past a post 152 in a cavity 148 before end 142 toes inwardly past the edge of a tooth 84. In this relation the leaf spring 140 serves to lock the spool at relatively low RPMS until centrifugal force overcomes the spring force and releases the spool. Low RPM can occur after partial entanglement of the line during operation or at startup until a minimum RPM is exceeded. The spring 140 provides a two-step startup operation thereby avoiding the possibility of any erratic line feed behavior during either line entanglement or startup.

In operation, actuation of balance beam 104 is very much analogous to the balance arm 68 described above. Since the balance beam 104 is relatively weighted in the section 118 as compared to the section 116, it is pivoted between the inner locking position and the outer release position in response to the net balance force F₄. As above, the component forces comprising force F₄ are represented by the centrifugal force causing the balance beam 104 to pivot counterclockwise about pivot 110 which is opposed by the vector force component of the tension in line 31 resulting from centrifugal force F₁ urging clockwise rotation. During such time as line 31 is at the predetermined length, the balance beam 104 is in the locked position whereby the distal toed end 130 is in a position to engage a spool locking tooth 84 to prevent rotation of the spool. At such time as a line feedout is to be effected to restore the line length, the forces rotate the balance beam 104 counterclockwise and release spool 64. The inertial payout governor or drag brake then operates in the manner described in connection with Figs. 11-14 to effect a controlled payout of the line 31. As soon as line length restoration has been achieved, the forces acting on the balance beam 104 are such as to cause the balance beam 104 to pivot clockwise to the inward locking position where the toe 130 engages either upper or lower locking teeth 84 or 88 to arrest further rotation of the spool 65.

Spring 140 which is subject to a bending moment about post 152 in response to the centrifugal forces F₅ imposed on the distal end 142 is utilized to prohibit rotation of the spool unless the head 29 is rotating above a minimum r.p.m. The properties of spring 140 are selected so as to enable a release of the spool 65 when the rotational velocity of the head 29 exceeds a predetermined magnitude so that payout under reduced speed conditions is positively precluded. As already noted, the use of spring 140 is optional and primarily provides a backup in the event of any shock force imposed on the exposed line 31 by which payout could begin before arrest of the spool could be properly effected by means of the balance beam 104. In this arrangement therefore, the distal spring end 142 in response to the rotational forces at F₅ will be in the position shown solid in Fig. 16 to intervene in the space 82 between locking teeth 84 and arrest operation of the spool 64 at predetermined reduced speeds thereof. When the set speed is exceeded the leaf spring 140 is bent outwardly to the position shown in phantom at which time the balance beam 104 governs activating and deactivating the inertially retarded rotation of the spool 64.

## Claims

1. A method of automatically feeding line from a rotating head (29,200) vegetation cutting device carrying a stored quantity of flexible line (31,212) on a spool (65,214) in the head (29,200), said line (31,212) having an outer line end portion of predetermined length projecting outwardly from the head (29,200) and rotated thereby in a cutting plane to create in the outer end portion of the line (31,212) a centrifugal payout force (F1) urging line payout from said head (29,200); the method comprising the step of rotating the head (29,200) to create said centrifugal payout force (F1) in the line (31,212) and a counterforce (F3) created in the line by said centrifugal force (F1) and being proportional to the length of said outer line end portion; centrifugally generating a centrifugal reference force (F2) being counter-balanced against the counterforce (F3); permitting the centrifugal payout force (F1) in the line (31,212) to cause payout of the line when said centrifugal reference force (F2) exceeds said counterforce (F3) in response to a shortening of said outer line end portion to a length less than said predetermined length; and terminating line payout while said counterforce (F3) exceeds said reference force (F2) when said outer line portion is relengthened to said predetermined length,
characterized in that during payout, a line drag force, which at least approximates said centrifugal payout force (F1) to controllably retard line payout is applied to the line in opposition to the centrifugal payout force (F1) by frictionally retarding unwinding of the spool (65,214).

2. The method of claim 1 wherein the retarding is achieved by frictionally retarding a portion or the line (31,200) during line payout.

3. The method of claim 1 wherein the retarding is achieved by inertially retarding the spool (65) within the head (29).

4. The method of claim 3 wherein terminating line payout while said counterforce (F3) exceeds said centrifugal reference force (F2) includes locking the line holding spool (65) and unlocking said spool when said counterforce (F3) no longer exceeds said first force.

5. The method of claim 1 wherein:
said stored quantity of flexible line (31) is wound on said spool (65) defining a portion of the rotating head (29) and being rotatable and axially reciprocable relative to the balance of the head (29), and
said step of applying a line drag force is performed by causing said spool (65) to simultaneously rotate and axially reciprocate relative to the balance of the rotating head (29) during line payout as line is pulled from the spool (65) by said centrifugal payout force (F1).

6. The method of claim 5 wherein:
causing said spool (65) to simultaneously rotate and axially reciprocate is performed by forming first cooperating cam means (84,92) on one end of said spool member and an opposed first surface of the balance of the head, forming second cooperating cam means (88,96) on the opposite end of said spool (65) and an opposed second surface of the balance of the head (29), and causing alternating operation of said first and second cooperating cam means (84,92;88,96) during rotation of the spool (65) relative to the balance of the head, caused by line payout.

7. The method of claim 6 wherein
said counterforce (F3) is created by mounting a control member (68) on the head for centrifugal movement relative thereto from a locking position toward an unlocking position to create the centrifugal reference force (F2); engaging a portion of the line (31) with said control member (68) to exert the counterforce (F3) thereon and urge it toward said locking position, whereby said control member (68) is moved to said locking position when said counterforce exceeds said reference force (F2), and is moved to said unlocking position when said reference force exceeds said counterforce (F3), and
terminating line payout is performed by causing said control member (68) to prevent rotation and axial reciprocation of said spool (65) relative to the balance of the head (29) when said control member (68) is in said locking position.

8. The method of claim 7 wherein
causing said control member (68) to prevent rotation and axial reciprocation of said spool (65) is performed by interposing a portion (80) of said control member (68) between an end of the spool (65) and its opposing surface portion of the balance of the head (29) to prevent axial reciprocation of the spool (65).

9. The method of claim 7 wherein:
said steps of forming said first and second cooperating cam means include the step of forming spaced axially projecting cam teeth (84,88) on said ends of the spool (65), and
said step of causing said control member (68) to prevent rotation and axial reciprocation of said spool (65) is performed by causing a control element (104) to engage one of said cam teeth in a manner preventing rotation or said spool (65) relative to the balance of the head (29).

10. The method of claim 1 wherein:
said counterforce is created by mounting a control member (230) on the head (200) for centrifugal pivotal movement relative thereto from a locking position toward an unlocking position to create said centrifugal reference force (F2), engaging a portion of the line (212) with said control member, (230) to exert said counterforce (F3) thereon and pivotally urge it toward said locking position, whereby said control member (230) is pivoted to said locking position when said counterforce (F3) exceeds said reference force, and is pivoted to said unlocking position when said reference force exceeds said counterforce (F3), wherein the line (212) is passed between a portion (222) of said head (200) and a port (238) of said control member (230), and
terminating line payout is performed by causing the line (212) to be pinched between said portions of said head and control member with sufficient force to lock the line against payout when said control member is pivoted to said locking position, and
said frictionally retarding is performed by causing the line (212) to be inched between said portions of said head and control member (230) with a lesser force which permits line payout but frictionally creates said line drag force.

11. The method of claim 2 further including the steps of centrifugally moving a pivoted control member (230) toward a first position to generate said centrifugal reference force (F3) and opposing the movement of said control member by said counterforce (F3) in the line (212) tending to move said control member (230) to a second position to counterbalance said reference force (F2) by said counterforce (F3) and position the control member (230) in a second position when said counter force (F3) exceeds said reference force (F2) and terminating line payout by engaging a portion of said line (212) with said control member (230) in said second position to lock the line.

12. The method of claim 11 wherein the step of frictionally retarding the line includes the step of pinching the line between portions (222,238) of said control member (230) and said head, when said control member is in said first position, to create a frictional drag force on the line which permits but controllably retards line payout.

13. The method of claim 12 wherein the step of pinching the line (212) is performed in a manner such that frictional drag force is substantially equal to said centrifugal payout force (F1).

14. The method of claim 12 wherein the step of locking the line (212) includes the step of pinching the line (212) between portions (222, 238) of said control member and said head, when said control member is in said second position, with sufficient force to lock the line against payout.

15. A vegetation cutting apparatus comprising: a head means (29,200), rotatable about an axis, and enclosing a spool (65,214) holding a stored quantity of flexible line (31,212) including an outer line end portion of a predetermined length rotatable by said head means in a cutting plane projecting outwardly therefrom to create in the outer line end portion a centrifugal payout force (F1) tending to pull additional line outwardly from said head (29,200);
drive means selectively operable to rotate said head means (29,200);
automatic line feed means (68;104;230), carried by said head means (29,200) and responsive to rotation thereof, for sensing a shortening of said outer line end portion and responsively paying out line to relengthen said outer line end portion to said predetermined length, said automatic line feed means including
means (68,104) for generating a centrifugal reference force (F2) in opposition to a counterforce (F3) in the line (31,212) created by said centrifugal payout force (F1) and
permitting said centrifugal payout force (F1) to cause line payout from said head means (29,200) when said centrifugal reference force (F2) and said counterforce (F3) are related in a first predetermined manner indicative of said outer line end portion having a length less than said predetermined length,
and for precluding said centrifugal payout force (F1) from causing line payout from said head (29,200) when said centrifugal reference force (F2) and said counterforce (F3) are related in a second predetermined manner indicative of said outer line end portion being at said predetermined length,
characterized by means (82-92;222,226) which create a drag force on the line (31,212) during payout thereof by frictionally retarding the spool to controllably retard line payout and maintain said counterforce (F3) in opposition to said centrifugal reference force (F2) in a manner assuring that said centrifugal reference force (F2) and said counterforce (F3) are related in said second predetermined manner when said outer line end portion reaches said predetermined length during line payout, said drag force at least approximating said centrifugal payout force (F1).

16. The apparatus of claim 15 wherein said automatic line feed means include:
brake means (65;82-96,222) to be locked and unlocked, said brake means, when locked, functioning to preclude said centrifugal payout force (F1) from causing line payout and, when unlocked, functioning to permit said centrifugal payout force (F1) to cause line payout from said head means (29), but creating said drag force on the line (31) during payout thereof, and
control means (68,104,230), carried by said head means (29) for generating said centrifugal reference force (F2) in opposition to said counter force (F3), said control means (68,104) being movable relative to said head means (29) to a first position when said centrifugal reference force (F2) and said counter force (F2) are related in said first predetermined manner, and being movable relative to said head means (29) to a second position when said centrifugal reference force (F3) and said counter force (F2) are related in said second predetermined manner, said control means (68,104) in said first position functioning to unlock said brake means (65;82-96) and, in said second position, functioning to lock said brake means (82-96).

17. The apparatus of claim 16
wherein: said brake means (65;82-96), when unlocked, are operative to inertially create said drag force on the line (31).

18. The apparatus of claim 17
wherein: said spool (65) is carried by the balance of the head means (29) for rotation and axial reciprocation relative thereto, and
said brake means (82-96) include said spool (65) and means (82-96) for causing simultaneous rotation and axial reciprocation of said spool (65) during line payout.

19. The apparatus of claim 18
wherein: said control means include a control member (68) carried by said head means (29) for movement relative thereto by said centrifugal reference force (F2) and said counter force (F3) between said fist and second positions, said control member having a portion (80) which, with said control member (68) in said second position, is interposed between an end of said spool (65) and an opposing surface of said head (29) in a manner preventing rotation and axial reciprocation of said spool member relative to the balance of said head means (29).

20. The apparatus of claim 18
wherein: said control means include a control member (104) carried by said head means (29) for movement relative thereto by said centrifugal reference force (F2) and said counter force (F3) between said first and second positions, said control member (104) having a portion (130) which, with said control member, (104) in said second position, is interlockable with a portion of said spool (65) in a manner preventing its rotation relative to the balance of said head means (29).

21. The apparatus of claims 18 and 19
whrein: said means for causing simultaneous rotation and axial reciprocation of said spool (65) include first cooperating cam means (84) on one end of said spool (65) and an opposing first surface portion (30,92) of the balance of said head means (29) and second cooperating cam means (88) on the opposite end of said spool (65) and an opposing second surface portion (94,96) of the balance of said head means (29), said first and second cooperating cam means (84,88) alternatively operating during rotation of said spool (65) relative to the balance of said head means (29) to cause vertical reciprocation of said spool (65) relative to the balance of said head means (29).

22. The apparatus of claim 21
wherein said first and second cooperaing cam means comprise:
a first set of circumferentially spaced cam teeth (84) formed on said one end of said spool (65),
a second set of circumferentially spaced cam teeth (92) formed on said first surface portion,
a third set of circumferentially spaced cam teeth (88) formed on said opposite end of said spool (65), and
a fourth set of circumferentially spaced cam teeth (96) formed on said second surface portion,
said first and third sets of cam teeth (84,86) being circumferentially aligned with one another,
said second and fourth set of cam teeth (92,96) being circumferentially misaligned with one another.

23. The apparatus of claim 16
whrein: said brake means (222,226,236), when unlocked, are operative to frictionally create said drag force on the line (212) and, when locked, are operative to frictionally preclude said centrifugal payout force (F1) from causing line payout.

24. The apparatus of claim 23
wherein: said brake means include means (222,236) for pinching the line (212) between a portion of said control means (230) and a portion (222) of said head (200) when said control means (230) are in each of said first and second positions.

25. The apparatus of claim 24
wherein: said control means comprise a control member (230) carried by said head means (200,220) for pivotal movement relative thereto between said first and second positions, said control member (230) having a cammed surface thereon which defines said portion of said control means and is configured to exert a variable pinching force on the line as said control member is pivoted between said first and second portions.

26. The apparatus of claim 25
wherein: said pinching force with said control member (230) in said first position is less than said pinching force with said control member (230) in said second position.

27. The apparatus of claim 15
wherein: said spool (65) is rotatable relative to the balance of said head means (29) during line payout, and
said apparatus further comprises means (80,130) for locking said spool (65) against rotation relative to the balance of said head means (29) when the rotational speed of said head means (29) is below a predetermined rotational speed.

28. The apparatus of claim 27
wherein: said means for locking said spool (65) comprise a locking member (68,104) centrifugally movable by rotation of said head means at said predetermined rotational speed from a first position in which said locking member (80,130) engages said spool (65) and prevents its rotation relative to the balance of said head (29), to a second position in which said locking member (80,130) is disengaged from said spool member.

29. The apparatus of claim 15
wherein: said spool (65) is carried by the balance of said head means for axial removal therefrom, said spool (65) having an axially projecting radially central end portion which is radially enlarged at its outer end so that it may be easily grasped and pulled to facilitate axial removal of said spool (65) when desired.

## Patentansprüche

1. Verfahren zum automatischen Abgeben von Schneidfaden von einer Pflanzen-Schneidvorrichtung mit rotierendem Kopf (29,200), die eine Vorratsmenge flexiblen Schneidfadens (31,212) auf einer Spule (65,214) in dem Kopf (29,200) trägt, wobei der Schneidfaden (31,212) einen äußeren Schneidfaden-Endbereich vorbestimmter Länge aufweist, der von dem Kopf (29,200) nach außen ragt und von diesem in einer Schneidebene rotationsmäßig bewegt wird, um in dem äußeren Endbereich des Schneidfadens (31,212) eine zentrifugale Abgabekraft (F1) zu erzeugen, die eine Schneidfadenabgabe von dem Kopf (29,200) erzwingt, wobei das Verfahren folgende Schritte aufweist:
rotationsmäßiges Bewegen des Kopfes (29,200) zur Erzeugung der zentrifugalen Abgabekraft (F1) in dem Schneidfaden (31,212) sowie einer Gegenkraft (F3), die in dem Schneidfaden durch die zentrifugale Kraft (F1) erzeugt wird und proportional zu der Länge des äußeren Schneidfaden-Endbereichs ist;
zentrifugales Erzeugen einer zentrifugalen Bezugskraft (F2), die gegenüber der Gegenkraft (F3) ausgeglichen ist;
Gestatten der zentrifugalen Abgabekraft (F1) in dem Schneidfaden (31,212) zur Veranlassung einer Schneidfadenabgabe, wenn die zentrifugale Bezugskraft (F2) die Gegenkraft (F3) ansprechend auf eine Verkürzung des äußeren Schneidfaden-Endbereichs auf eine geringere als die vorbestimmte Länge übersteigt; und Beenden der Schneidfadenabgabe, während die Gegenkraft (F3) die Bezugskraft (F2) übersteigt, wenn der äußere Schneidfadenbereich wieder auf die vorbestimmte Länge verlängert ist,
**dadurch gekennzeichnet,**
daß während der Abgabe eine Schneidfaden-Bremskraft, die der zentrifugalen Abgabekraft (F1) zum steuerbaren Verzögern der Schneidfadenabgabe wenigstens in etwa angenähert ist, auf den Schneidfaden entgegengesetzt zu der zentrifugalen Abgabekraft (F1) ausgeübt wird, indem das Abwickeln der Spule (65,240) reibungsschlüssig verzögert wird.

2. Verfahren nach Anspruch 1,
wobei die Verzögerung durch reibungsschlüssiges Verzögern eines Bereichs des Schneidfadens (31,200) während der Schneidfadenabgabe erzielt wird.

3. Verfahren nach Anspruch 1,
wobei die Verzögerung durch trägheitsmäßige Verzögerung der Spule (65) in dem Kopf (29) erzielt wird.

4. Verfahren nach Anspruch 3,
wobei das Beenden der Schneidfadenabgabe, während die Gegenkraft (F3) die zentrifugale Bezugskraft (F2) übersteigt, eine Verriegelung der Schneidfaden-Aufnahmespule (65) sowie eine Entriegelung der Spule beinhaltet, wenn die Gegenkraft (F3) die zentrifugale Bezugskraft nicht mehr übersteigt.

5. Verfahren nach Anspruch 1,
wobei die Aufnahmemenge des flexiblen Schneidfadens (31) auf die Spule (65) gewickelt wird, die einen Bereich des rotierenden Kopfes (29) bildet und relativ zu dem Rest des Kopfes (29) drehbar sowie axial hin- und herbewegbar ist,
und wobei der Schritt der Ausübung einer Schneidfaden-Bremskraft dadurch erfolgt, daß man die Spule (65) dazu veranlaßt, während der Schneidfadenabgabe beim Abziehen von Schneidfaden von der Spule (65) durch die zentrifugale Abgabekraft (F1) gleichzeitig eine Rotationsbewegung sowie eine axiale Hin- und Herbewegung relativ zu dem Rest des rotierenden Kopfes (29) auszuführen.

6. Verfahren nach Anspruch 5,
wobei das Veranlassen der Spule (65) zur gleichzeitigen Ausführung einer Rotationsbewegung und einer axialen Hin- und Herbewegung dadurch erzielt wird, daß eine erste zusammenwirkende Steuerflächeneinrichtung (84,92) an dem einen Ende des Spulenelements und an einer gegenüberliegenden ersten Fläche des übrigen Kopfes ausgebildet ist, daß eine zweite zusammenwirkende Steuerflächeneinrichtung (88,96) an dem gegenüberliegenden Ende der Spule (65) und an einer gegenüberliegenden zweiten Fläche des übrigen Kopfes (29) ausgebildet ist, und daß während der Rotation der Spule (65) relativ zu dem Rest des Kopfes bedingt durch die Schneidfadenabgabe ein abwechselnder Betrieb der ersten und der zweiten zusammenwirkenden Steuerflächeneinrichtung (94,92;88,96) hervorgerufen wird.

7. Verfahren nach Anspruch 6,
wobei die Gegenkraft (F3) erzeugt wird durch Anbringen eines Steuerelements (68) an dem Kopf zur Ausführung einer zentrifugalen Bewegung relativ zu diesem von einer Verriegelungsposition in Richtung auf eine Entriegelungsposition zur Erzeugung der zentrifugalen Bezugskraft (F2); In-Eingriff-Bringen eines Bereichs des Schneidfadens (31) mit dem Steuerelement (68) zur Ausübung der Gegenkraft (F3) auf diesen sowie zum Drücken desselben in Richtung auf die Verriegelungsposition, wodurch das Steuerelement (68) in die Verriegelungsposition bewegt wird, wenn die Gegenkraft die Bezugskraft (F2) übersteigt, sowie in die Entriegelungsposition bewegt wird, wenn die Bezugskraft die Gegenkraft (F3) übersteigt;
und wobei die Beendigung der Schneidfadenabgabe dadurch erzielt wird, daß man das Steuerelement (68) veranlaßt, eine Rotation und eine axiale Hin- und Kerbewegung der Spule (65) relativ zu dem Rest des Kopfes (29) zu verhindern, wenn sich das Steuerelement (68) in der Verriegelungsposition befindet.

8. Verfahren nach Anspruch 7,
wobei die Veranlassung des Steuerelements (68) zum Verhindern der Rotation und der axialen Hin- und Herbewegung der Spule (65) dadurch erfolgt, daß ein Bereich (80) des Steuerelements (68) zwischen einem Ende der Spule (65) und deren gegenüberliegendem Oberflächenbereich des Rests des Kopfes (29) angeordnet wird, um eine axiale Hin- und Herbewegung der Spule (65) zu verhindern.

9. Verfahren nach Anspruch 7,
wobei die Schritte zur Bildung der ersten und der zweiten zusammenwirkenden Steuerflächeneinrichtung die Bildung voneinander beabstandeter, axial vorstehender Steuerflächenzähne (84,88) an den Enden der Spule (65) beinhalten,
und wobei das Steuerelement (68) dadurch zum Verhindern der Rotation und der axialen Hin- und Herbewegung der Spule (65) veranlaßt wird, daß man ein Steuerglied (104) zum In-Eingriff-Treten mit einem der Steuerflächenzähne in einer Weise veranlaßt, daß eine Rotation der Spule (65) relativ zu dem Rest des Kopfes (29) verhindert wird.

10. Verfahren nach Anspruch 1,
wobei die Gegenkraft erzeugt wird durch Anbringen eines Steuerelements (230) an dem Kopf (200) zur Ausführung einer zentrifugalen Schwenkbewegung relativ zu diesem von einer Verriegelungsposition in Richtung auf eine Entriegelungsposition zur Erzeugung der zentrifugalen Bezugskraft (F2), In-Eingriff-Bringen eines Bereichs des Schneidfadens (212) mit dem Steuerelement (230) zum Ausüben der Gegenkraft (F3) auf dieses sowie zum zwangsweisen Verschwenken desselben in Richtung auf die Verriegelungsposition, wodurch das Steuerelement (230) in die Verriegelungsposition verschwenkt wird, wenn die Gegenkraft (F3) die Bezugskraft übersteigt, und in die Entriegelungsposition verschwenkt wird, wenn die Bezugskraft die Gegenkraft (F3) übersteigt,
wobei der Schneidfaden (212) zwischen einem Bereich (222) des Kopfes (200) und einem Bereich (238) des Steuerelements (230) hindurchgeführt wird, und
wobei die Beendigung der Schneidfadenabgabe dadurch erfolgt, daß man ein Einklemmen des Schneidfadens (212) zwischen den Bereichen des Kopfes und des Steuerelements mit einer ausreichenden Kraft zum Verriegeln des Schneidfadens gegen eine Abgabe veranlaßt, wenn das Steuerelement in die Verriegelungsposition verschwenkt wird, und
wobei die reibungsschlüssige Verzögerung dadurch erfolgt, daß man ein Einklemmen des Schneidfadens (212) zwischen den Bereichen des Kopfes und des Steuerelements (230) mit einer geringeren Kraft veranlaßt, die eine Schneidfadenabgabe gestattet, jedoch die Schneidfaden-Bremskraft reibungsschlüssig erzeugt.

11. Verfahren nach Anspruch 2,
weiterhin mit einer zentrifugalen Bewegung eines verschwenkten Steuerelements (230) in Richtung auf eine erste Position zur Erzeugung der zentrifugalen Bezugskraft (F2) sowie entgegengesetztes Einwirken auf die Bewegung des Steuerelements durch die Gegenkraft (F3) in dem Schneidfaden (212) mit der Tendenz zum Bewegen des Steuerelements (230) in eine Zweite Position zum Ausgleichen der Bezugskraft (F2) mit der Gegenkraft (F3) sowie zum Positionieren des Steuerelements (230) in einer zweiten Position, wenn die Gegenkraft (F3) die Bezugskraft (F2) übersteigt, sowie Beendigung der Schneidfadenabgabe durch In-Eingriff-Bringen eines Bereichs des Schneidfadens (212) mit dem Steuerelement (230) in der zweiten Position zur Verriegelung des Schneidfadens.

12. Verfahren nach Anspruch 11,
wobei die reibungsschlüssige Verzögerung des Schneidfadens unter Einklemmen des Schneidfadens zwischen Bereichen (222,238) des Steuerelements (230) und des Kopfes erfolgt, wenn sich das Steuerelement in der ersten Position befindet, um an dem Schneidfaden eine reibungsschlüssige Bremskraft zu erzeugen, die eine Schneidfadenabgabe gestattet, diese jedoch in steuerbarer Weise verzögert.

13. Verfahren nach Anspruch 12,
wobei das Einklemmen des Schneidfadens (212) derart ausgeführt wird, daß die reibungsschlüssige Bremskraft im wesentlichen gleich der zentrifugalen Abgabekraft (F1) ist.

14. Verfahren nach Anspruch 12,
wobei die Verriegelung des Schneidfadens (212) das Einklemmen des Schneidfadens (212) zwischen Bereichen (222,238) des Steuerelements und des Kopfes beinhaltet, wenn sich das Steuerelement in der zweiten Position befindet, wobei eine ausreichende Kraft zum Verriegeln des Schneidfadens gegen eine Abgabe aufgebracht wird.

15. Pflanzenschneidvorrichtung mit:
einer Kopfeinrichtung (29,200), die um eine Achse drehbar ist und eine Spule (65,214) umschließt, auf der eine Aufnahmemenge flexiblen Schneidfadens (31,212) aufgenommen ist, der einen äußeren Schneidfaden-Endbereich mit einer vorbestimmten Länge aufweist, der durch die Kopfeinrichtung in einer von dieser nach außen wegragenden Schneidebene drehbar ist, um in dem äußeren Schneidfaden-Endbereich eine zentrifugale Abgabekraft (F1) mit der Tendenz zum Herausziehen von zusätzlichem Schneidfaden aus dem Kopf (29,200) zu erzeugen;
mit einer Antriebseinrichtung, die zum rotationsmäßigen Bewegen der Kopfeinrichtung (29,200) selektiv betätigbar ist;
mit einer automatischen Schneidfadenabgabeeinrichtung (68;104;230), die von der Kopfeinrichtung (29,200) getragen ist und ansprechend auf eine Rotation derselben eine Verkürzung des äußeren Schneidfaden-Endbereichs erfaßt und darauf ansprechend Schneidfaden abgibt, um den äußeren Schneidfaden-Endbereich wieder auf die vorbestimmte Länge zu verlängern, wobei die automatische Schneidfadenabgabeeinrichtung eine Einrichtung (68,104) aufweist zum Erzeugen einer zentrifugalen Bezugskraft (F2) entgegengesetzt zu einer durch die zentrifugale Abgabekraft (F1) bedingten Gegenkraft (F3) in dem Schneidfaden (31,212), sowie zum Gestatten der zentrifugalen Abgabekraft (F1) zur Veranlassung einer Schneidfadenabgabe von der Kopfeinrichtung (29,200), wenn die zentrifugale Bezugskraft (F2) und die Gegenkraft (F3) in einer ersten vorbestimmten Weise in Beziehung zueinander stehen, welche aufzeigt, daß der äußere Schneidfaden-Endbereich eine geringere Länge als die vorbestimmte Länge besitzt, sowie zum Verhindern der zentrifugalen Abgabekraft (F1) zur Veranlassung einer Schneidfadenabgabe von der Kopfeinrichtung (29,200), wenn die zentrifugale Bezugskraft (F2) und die Gegenkraft (F3) in einer zweiten vorbestimmten Weise in Beziehung zueinander stehen, welche aufzeigt, daß der äußere Schneidfaden-Endbereich die vorbestimmte Länge besitzt,
**gekennzeichnet durch**
Einrichtungen (82-92;222,226), die eine auf den Schneidfaden (31,212) während der Abgabe desselben wirkende Bremskraft durch reibungsschlüssiges Verzögern der Spule zum steuerbaren Verzögern der Schneidfadenabgabe erzeugen und die Gegenkraft (F3) entgegengesetzt zu der zentrifugalen Bezugskraft (F2) in einer Weise aufrechterhalten, daß sichergestellt ist, daß die zentrifugale Bezugskraft (F2) und die Gegenkraft (F3) in der zweiten vorbestimmten Weise in Beziehung zueinander stehen, wenn der äußere Schneidfaden-Endbereich während der Schneidfadenabgabe die vorbestimmte Länge erreicht, wobei die Bremskraft wenigstens etwa an die zentrifugale Abgabekraft (F1) angenähert ist.

16. Vorrichtung nach Anspruch 15, wobei die automatische Schneidfaden-Abgabeeinrichtung folgendes aufweist:
eine Bremseinrichtung (65;82-96,222), die verriegelbar und entriegelbar ist, wobei die Bremseinrichtung im verriegelten Zustand bewirkt, daß die zentrifugale Abgbekraft (F1) an der Veranlassung einer Schneidfadenabgabe gehindert ist, und die im entriegelten Zustand die Funktion hat, der zentralen Abgabekraft (F1) die Veranlassung einer Schneidfadenabgabe von der Kopfeinrichtung (29) zu gestatten, wobei sie jedoch während der Schneidphasenabgabe die auf den Schneidfaden (31) wirkende Bremskraft erzeugt, und
eine von der Kopfeinrichtung (29) getragene Steuereinrichtung (68,104,230) zum Erzeugen der zentrifugalen Bezugskraft (F2) entgegengesetzt zu der Gegenkraft (F3), wobei die Steuereinrichtung (68,104) relativ zu der Kopfeinrichtung (29) in eine erste Position bewegbar ist, wenn die zentrifugale Bezugskraft (F2) und die Gegenkraft (F3) in der ersten vorbestimmten Weise in Beziehung zueinander stehen, und relativ zu der Kopfeinrichtung (29) in eine zweite Position bewegbar ist, wenn die zentrifugale Bezugskraft (F3) und die Gegenkraft (F2) in der zweiten vorbestimmten Weise in Beziehung zueinander stehen, wobei die Steuereinrichtung (68,104) in der ersten Position eine Entriegelung der Bremseinrichtung (65;82-96) bewirkt und in der zweiten Position eine Verriegelung der Bremseinrichtung (82-96) bewirkt.

17. Vorrichtung nach Anspruch 16,
wobei die Bremseinrichtung (65;82-96) im entriegelten Zustand eine trägheitsmäßige Erzeugung der auf den Schneidfaden (31) wirkenden Bremskraft bewirkt.

18. Vorrichtung nach Anspruch 17,
wobei die Spule (65) von dem Rest der Kopfeinrichtung (29) derart getragen ist, daß sie relativ dazu rotationsmäßig beweglich sowie axial hin- und herbewegbar ist, und wobei die Bremseinrichtung (82,96) die Spule (65) sowie eine Einrichtung (82,96) zur Veranlassung einer gleichzeitigen Rotationsbewegung und axialen Hin- und Herbewegung der Spule (65) während der Schneidfadenabgabe beinhaltet.

19. Vorrichtung nach Anspruch 18,
wobei die Steuereinrichtung ein Steuerelement (68) beinhaltet, das von der Kopfeinrichtung (29) getragen ist, um relativ zu dieser durch die zentrifugale Bezugskraft (F2) und die Gegenkraft (F3) zwischen der ersten und der zweiten Position eine Bewegung auszuführen, wobei das Steuerelement einen Bereich (80) aufweist, der bei Anordnung des Steuerelements (68) in der zweiten Position zwischen einem Ende der Spule (65) und einer gegenüberliegenden Fläche der Kopfeinrichtung (29) in einer Weise angeordnet ist, daß eine Rotationsbewegung und eine axiale Hin- und Herbewegung des Spulenelements relativ zu dem Rest der Kopfeinrichtung (29) verhindert sind.

20. Vorrichtung nach Anspruch 18,
wobei die Steuereinrichtung ein Steuerelement (104) aufweist, das von der Kopfeinrichtung (29) getragen ist, relativ zu dieser durch die zentrifugale Bezugskraft (F2) und die Gegenkraft (F3) zwischen der ersten und der zweiten Position eine Bewegung auszuführen, wobei das Steuerelement (104) einen Bereich (130) aufweist, der bei Anordnung des Steuerelements (104) in der zweiten Position mit einem Bereich der Spule (65) in einer Weise verriegelbar ist, daß eine Rotationsbewegung desselben relativ zu dem Rest der Kopfeinrichtung (29) verhindert ist.

21. Vorrichtung nach Anspruch 18 und 19,
wobei die Einrichtung zum Veranlassen einer gleichzeitigen Rotationsbewegung und axialen Hin- und Herbewegung der Spule (65) eine erste zusammenwirkende Steuerflächeneinrichtung (84) an dem einen Ende der Spule (65) und einem gegenüberliegenden ersten Flächenbereich (30,92) des Rests der Kopfeinrichtung (29) sowie eine zweite zusammenwirkende Steuerflächeneinrichtung (88) an dem gegenüberliegenden Ende der Spule (65) und einem gegenüberliegenden zweiten Flächenbereich (94,96) des Rests der Kopfeinrichtung (29) beinhaltet, wobei die erste und die zweite zusammenwirkende Steuerflächeneinrichtung (84,88) während der Rotation der Spule (65) relativ zu dem Rest der Kopfeinrichtung (29) abwechselnd arbeiten, um eine vertikale Hin- und Herbewegung der Spule (65) relativ zu dem Rest der Kopfeinrichtung (29) zu veranlassen.

22. Vorrichtung nach Anspruch 21,
wobei die erste und die zweite zusammenwirkende Steuerflächeneinrichtung folgendes aufweisen: einen ersten Satz umfangsmäßig voneinander beabstandeter Steuerflächenzähne (84), die an dem einen Ende der Spule (65) ausgebildet sind, einen zweiten Satz umfangsmäßig voneinander beabstandeter Steuerflächenzähne (92), die an dem ersten Flächenbereich ausgebildet sind, einen dritten Satz umfangsmäßig voneinander beabstandeter Steuerflächenzähne (88), die an dem gegenüberliegenden Ende der Spule (65) ausgebildet sind, und
einen vierten Satz umfangsmäßig voneinander beabstandeter Steuerflächenzähne (96), die an dem zweiten Flächenbereich ausgebildet sind, wobei der erste und der dritte Satz der Steuerflächenzähne (84,86) umfangsmäßig miteinander ausgerichtet sind, und wobei der zweite und der vierte Satz der Steuerflächenzähne (92,96) umfangsmäßig miteinander fehlausgerichtet sind.

23. Vorrichtung nach Anspruch 16,
wobei die Bremseinrichtung (222,226,236) im unverriegelten Zustand eine reibungsschlüssige Erzeugung der auf den Schneidfaden (212) wirkenden Bremskraft bewirkt und im verriegelten Zustand in reibungsschlüssiger Weise verhindert, daß die zentrifugale Abgabekraft (F1) eine Schneidfadenabgabe bewirkt.

24. Vorrichtung nach Anspruch 23,
wobei die Bremseinrichtung eine Einrichtung (222,236) zum Einklemmen des Schneidfadens (212) zwischen einem Bereich der Steuereinrichtung (230) und einem Bereich (222) des Kopfes (200) aufweist, wenn sich die Steuereinrichtung (230) jeweils in der ersten und der zweiten Position befindet.

25. Vorrichtung nach Anspruch 24,
wobei die Steuereinrichtung ein Steuerelement (230) aufweist, das von der Kopfeinrichtung (200,220) zur Ausführung einer Schwenkbewegung relativ zu dieser zwischen der ersten und der zweiten Position getragen ist, wobei das Steuerelement (230) eine steuerflächenartig ausgebildete Oberfläche aufweist, die den Bereich der Steuereinrichtung definiert und derart konfiguriert ist, daß sie eine variable Klemmkraft auf den Schneidfaden ausübt, wenn das Steuerelement zwischen der ersten und der zweiten Position verschwenkt wird.

26. Vorrichtung nach Anspruch 25,
wobei die Klemmkraft bei in der ersten Position befindlichem Steuerelement (230) geringer ist als die Klemmkraft bei in der zweiten Position befindlichem Steuerelement (230).

27. Vorrichtung nach Anspruch 15,
wobei die Spule (65) während der Schneidfadenabgabe relativ zu dem Rest der Kopfeinrichtung (29) drehbar ist, und wobei die Vorrichtung ferner eine Einrichtung (80,130) zum Verriegeln der Spule (65) gegen eine Rotation relativ zu dem Rest der Kopfeinrichtung (29) aufweist, wenn die Rotationsgeschwindigkeit der Kopfeinrichtung (29) unter einer vorbestimmten Rotationsgeschwindigkeit liegt.

28. Vorrichtung nach Anspruch 27,
wobei die Einrichtung zum Verriegeln der Spule (65) ein Verriegelungselement (68,104) aufweist, das durch Rotation der Kopfeinrichtung mit der vorbestimmten Rotationsgeschwindigkeit von einer ersten Position, in der das Verriegelungselement (80,130) an der Spule (65) angreift und eine Rotation derselben relativ zu dem Rest der Kopfeinrichtung (29) verhindert, in eine zweite Position zentrifugal beweglich ist, in der das Verriegelungselement (80,130) von dem Spulenelement getrennt ist.

29. Vorrichtung nach Anspruch 15,
wobei die Spule (65) von dem Rest der Kopfeinrichtung derart getragen ist, daß sie von diesem axial entfernbar ist, wobei die Spule (65) einen axial wegragenden, radial zentralen Endbereich aufweist, der an seinem äußeren Ende radial verbreitert ist, so daß er leicht greifbar und abziehbar ist, um eine axiales Entfernen der Spule (65) zu erleichtern, wenn dies erwünscht ist.

## Revendications

1. Procédé pour délivrer automatiquement du fil d'un appareil de coupe de végétation à tête tournante (29, 200) supportant une certaine quantité de fil souple (31, 212) emmagasiné sur une bobine (65, 214) située dans la tête (29, 200), ledit fil (31, 212) ayant une partie d'extrémité de fil extérieure d'une longueur prédéterminée faisant saillie à l'extérieur de la tête (29, 200) et tournant de ce fait dans un plan de coupe pour créer dans la partie d'extrémité extérieure du fil (31, 212) une force centrifuge de déroulement (F1) forçant le fil à se dérouler de ladite tête (29, 200); le procédé comprenant une étape consistant à faire tourner la tête (29, 200) pour créer ladite force centrifuge de déroulement (F1) dans le fil (31, 212) et une force antagoniste (F3) engendrée dans le fil par ladite force centrifuge (F1) et proportionnelle à la longueur de ladite partie d'extrémité de fil extérieure; engendrer par centrifugation une force centrifuge de référence (F2) contrebalancée par la force antagoniste (F3); permettre à la force centrifuge de déroulement (F1) du fil (31, 212) de provoquer le déroulement du fil lorsque ladite force centrifuge de référence (F2) dépasse ladite force antagoniste (F3) en réaction à un raccourcissement de ladite partie d'extrémité de fil extérieure à une longueur inférieure à ladite longueur prédéterminée; et arrêter le déroulement du fil quand ladite force antagoniste (F3) dépasse ladite force de référence (F2) lorsque ladite partie de fil extérieure est rallongée à ladite longueur prédéterminée,
caractérisé en ce que pendant le déroulement une force de retenue du fil à-peu-près égale à ladite force centrifuge de déroulement (F1) est appliquée au fil en opposition à la force centrifuge de déroulement (F1) pour freiner de façon contrôlée le déroulement du fil en freinant par frottement le dévidage de la bobine (65, 214).

2. Procédé selon la revendication 1 dans lequel le freinage est effectué en freinant par frottement une partie du fil (31, 200) pendant le déroulement du fil.

3. Procédé selon la revendication 1 dans lequel le freinage est effectué par freinage inertiel de la bobine (65) à l'intérieur de la tête (29).

4. Procédé selon la revendication 3 dans lequel l'arrêt du déroulement du fil pendant que ladite force antagoniste (F3) dépasse ladite force centrifuge de référence (F2) comprend le blocage de la bobine de fil (65) et le déblocage de ladite bobine lorsque ladite force antagoniste (F3) ne dépasse plus ladite force centrifuge de référence.

5. Procédé selon la revendication 1 dans lequel :
ladite quantité de fil souple emmagasinée (31) est enroulée sur ladite bobine (65) formant une partie de la tête tournante (29) et pouvant tourner et aller et venir axialement par rapport au reste de la tête (29), et
ladite étape consistant à appliquer une force de retenue au fil est exécutée en faisant simultanément tourner et aller et venir axialement ladite bobine (65) par rapport au reste de la tête tournante (29) pendant que le fil est déroulé en étant tiré de la bobine (65) par ladite force centrifuge de déroulement (F1).

6. Procédé selon la revendication 5 dans lequel :
on fait simultanément tourner et aller et venir axialement ladite bobine (65) en formant des premiers moyens de came coopérant (84, 92) sur une extrémité dudit élément de bobine et sur une première surface opposée du reste de la tête, en formant des seconds moyens de came coopérant (88, 96) sur l'extrémité opposée de ladite bobine (65) et sur une seconde surface opposée du reste de la tête (29), et en provoquant un fonctionnement alterné desdits premiers et seconds moyens de came coopérant (84, 92; 88, 96) pendant la rotation de la bobine (65) par rapport au reste de la tête, provoquée par le déroulement du fil.

7. Procédé selon la revendication 6 dans lequel
ladite force antagoniste (F3) est créée en montant un élément de régulation (68) sur la tête pour qu'il ait un mouvement centrifuge par rapport à celle-ci d'une position de blocage vers une position de déblocage pour créer la force centrifuge de référence (F2); en mettant en prise une partie du fil (31) avec ledit élément de régulation (68) pour y exercer la force antagoniste (F3) et le pousser vers ladite position de blocage, ledit élément de régulation (68) étant ainsi déplacé à ladite position de blocage lorsque ladite force antagoniste dépasse ladite force de référence (F2), et étant déplacé à ladite position de déblocage lorsque ladite force de référence dépasse ladite force antagoniste (F3), et
on arrête le déroulement du fil en faisant empêcher par ledit élément de régulation (68) la rotation et le va-et-vient axial de ladite bobine (65) par rapport au reste de la tête (29) lorsque ledit élément de régulation (68) se trouve dans ladite position de blocage.

8. Procédé selon la revendication 7 dans lequel
on fait empêcher par ledit élément de régulation (68) la rotation et le va-et-vient axial de ladite bobine (65) en interposant une partie (80) dudit élément de régulation (68) entre une extrémité de la bobine (65) et sa partie de surface opposée du reste de la tête (29) pour empêcher le va-et-vient axial de la bobine (65).

9. Procédé selon la revendication 7 dans lequel :
lesdites étapes consistant à former lesdits premiers et seconds moyens de came coopérant comprennent l'étape consistant à former des dents de came espacées faisant saillie axialement (84, 88) sur lesdites extrémités de la bobine (65), et
ladite étape consistant à faire empêcher par ledit élément de régulation (68) la rotation et le va-et-vient axial de ladite bobine (65) est exécutée en provoquant la mise en prise d'un élément de régulation (104) avec l'une desdites dents de came d'une façon qui empêche la rotation de ladite bobine (65) par rapport au reste de la tête (29).

10. Procédé selon la revendication 1 dans lequel :
ladite force antagoniste est créée en montant un élément de régulation (230) sur la tête (200) de façon qu'il ait un mouvement pivotant centrifuge par rapport à celle-ci d'une position de blocage vers une position de déblocage pour créer ladite force centrifuge de référence (F2), en mettant en prise une partie du fil (212) avec ledit élément de régulation (230) pour y exercer ladite force antagoniste (F3) et le pousser par pivotement vers ladite position de blocage, ledit élément de régulation (230) étant ainsi tourné à ladite position de blocage lorsque ladite force antagoniste (F3) dépasse ladite force de référence, et étant tourné à ladite position de déblocage lorsque ladite force de référence dépasse ladite force antagoniste (F3), dans lequel
le fil (212) est passé entre une partie (222) de ladite tête (200) et une partie (238) dudit élément de régulation (230), et
l'arrêt du déroulement du fil est effectué en provoquant le pincement du fil (212) entre lesdites parties de ladite tête et dudit élément de régulation avec une force suffisante pour bloquer le déroulement du fil lorsque ledit élément de régulation est tourné à ladite position de blocage, et
ledit freinage par frottement est effectué en provoquant le pincement du fil (212) entre lesdites parties de ladite tête et dudit élément de régulation (230) avec une force plus faible qui autorise le déroulement du fil mais engendre par frottement ladite force de retenue du fil.

11. Procédé selon la revendication 2 comprenant de plus les étapes consistant à déplacer par centrifugation un élément de régulation pivotant (230) vers une première position pour engendrer ladite force centrifuge de référence (F2) et à s'opposer au mouvement dudit élément de régulation par ladite force antagoniste (F3) dans le fil (212) tendant à déplacer ledit élément de régulation (230) en une seconde position pour contrebalancer ladite force de référence (F2) par ladite force antagoniste (F3) et positionner l'élément de régulation (230) dans une seconde position lorsque ladite force antagoniste (F3) dépasse ladite force de référence (F2) et arrêter le déroulement du fil en mettant en prise une partie dudit fil (212) avec ledit élément de régulation (230) dans ladite seconde position pour bloquer le fil.

12. Procédé selon la revendication 11 dans lequel l'étape consistant à freiner le fil par frottement comprend l'étape consistant à pincer le fil entre des parties (222, 238) dudit élément de régulation (230) et de ladite tête lorsque ledit élément de régulation est dans ladite première position pour créer une force de retenue par frottement dans le fil qui autorise mais freine de façon contrôlée le déroulement du fil.

13. Procédé selon la revendication 12 dans lequel l'étape consistant à pincer le fil (212) est exécutée de telle façon que la force de retenue par frottement soit sensiblement égale à ladite force centrifuge de déroulement (F1).

14. Procédé selon la revendication 12 dans lequel l'étape consistant à bloquer le fil (212) comprend l'étape consistant à pincer le fil entre des parties (222, 238) dudit élément de régulation et de ladite tête, lorsque ledit élément de régulation se trouve dans ladite seconde position, avec une force suffisante pour bloquer le déroulement du fil.

15. Dispositif de coupe de végétation comprenant : des moyens de tête (29, 200), pouvant tourner autour d'un axe, et contenant une bobine (65, 214) sur laquelle est stockée une certaine quantité de fil souple (31, 212) comprenant une partie d'extrémité extérieure du fil d'une longueur prédéterminée pouvant être mise en rotation par lesdits moyens de tête dans un plan de coupe s'étendant à l'extérieur de ceux-ci pour créer dans la partie d'extrémité extérieure du fil une force centrifuge de déroulement (F1) tendant à tirer du fil supplémentaire de ladite tête (29, 200) vers l'extérieur;
des moyens moteurs pouvant être actionnés sélectivement pour faire tourner lesdits moyens de tête (29, 200);
des moyens de délivrance automatique de fil (68; 104; 230), supportés par lesdits moyens de tête (29, 200) et réagissant à la rotation de ceux-ci pour détecter un raccourcissement de ladite partie d'extrémité extérieure du fil et pour dérouler en réponse du fil pour rallonger ladite partie d'extrémité extérieure du fil jusqu'à ladite longueur prédéterminée, lesdits moyens de délivrance automatique de fil comprenant
des moyens (68, 104) pour engendrer une force centrifuge de référence (F2) en opposition à une force antagoniste (F3) dans le fil (31, 212) créée par ladite force centrifuge de déroulement (F1) et
pour permettre à ladite force centrifuge de déroulement de fil (F1) de provoquer le déroulement du fil desdits moyens de tête (29, 200) lorsque ladite force de référence centrifuge (F2) et ladite force antagoniste (F3) sont en relation d'une première façon prédéterminée indiquant que ladite portion d'extrémité extérieure du fil a une longueur inférieure à ladite longueur prédéterminée,
et pour empêcher ladite force centrifuge de déroulement (F1) de provoquer le déroulement du fil desdits moyens de tête (29, 200) lorsque ladite force centrifuge de référence (F2) et ladite force antagoniste (F3) sont en relation d'une seconde façon prédéterminée indiquant que ladite partie d'extrémité extérieure du fil a la longueur prédéterminée,
caractérisé par des moyens (82-92; 222; 226) qui créent une force de retenue sur le fil (31, 212) pendant le déroulement de celui-ci en freinant par frottement la bobine pour freiner de façon contrôlée le déroulement du fil et maintenir ladite force antagoniste (F3) en opposition à ladite force centrifuge de référence (F2) d'une façon garantissant que ladite force centrifuge de référence (F2) et ladite force antagoniste (F3) sont en relation de ladite seconde façon prédéterminée lorsque ladite partie d'extrémité extérieure du fil atteint ladite longueur prédéterminée au cours du déroulement du fil, ladite force de retenue étant au moins à-peu-près égale à ladite force centrifuge de déroulement (F1).

16. Dispositif selon la revendication 15 dans lequel lesdits moyens de délivrance automatique de fil comprennent :
des moyens de frein (65; 82-96, 222) destinés à être bloqués et à être débloqués, lesdits moyens de frein servant, lorsqu'ils sont bloqués, à empêcher ladite force centrifuge de déroulement (F1) de provoquer le déroulement du fil et servant, lorsqu'ils sont débloqués, à permettre à ladite force centrifuge de déroulement (F1) de provoquer le déroulement du fil desdits moyens de tête (29), mais créant ladite force de retenue sur le fil (31) pendant le déroulement de celui-ci, et
des moyens de régulation (68, 104, 230), supportés par lesdits moyens de tête (29) pour engendrer ladite force centrifuge de référence (F2) en opposition à ladite force antagoniste (F3), lesdits moyens de régulation (68, 104) pouvant se déplacer par rapport auxdits moyens de tête (29) en une première position lorsque ladite force centrifuge de référence (F2) et ladite force antagoniste (F3) sont en relation de ladite première façon prédéterminée, et pouvant se déplacer par rapport auxdits moyens de tête (29) en une seconde position lorsque ladite force centrifuge de référence (F2) et ladite force antagoniste (F3) sont en relation de ladite seconde façon prédéterminée, lesdits moyens de régulation (68, 104) servant, dans ladite première position, à débloquer lesdits moyens de frein (65; 82-96) et servant, dans ladite seconde position, à bloquer lesdits moyens de frein (82-96).

17. Dispositif selon la revendication 16
dans lequel : lesdits moyens de frein (65; 82-96), lorsqu'ils sont débloqués, servent à créer de façon inertielle ladite force de retenue sur le fil (31).

18. Dispositif selon la revendication 17
dans lequel : ladite bobine (65) est supportée par le reste des moyens de tête (29) de façon à tourner et aller et venir axialement par rapport à ceux-ci, et
lesdits moyens de frein (82-96) comprennent ladite bobine (65) et des moyens (82-96) pour provoquer simultanément la rotation et le va-et-vient axial de ladite bobine (65) pendant le déroulement du fil.

19. Dispositif selon la revendication 18
dans lequel : lesdits moyens de régulation comprennent un élément de régulation (68) supporté par lesdits moyens de tête (29) de façon à pouvoir se déplacer par rapport à ceux-ci sous l'effet de ladite force centrifuge de référence (F2) et de ladite force antagoniste (F3) entre lesdites première et seconde positions, ledit élément de régulation comprenant une partie (80) qui, lorsque ledit élément de régulation (68) est dans la seconde position, est interposée entre une extrémité de ladite bobine (65) et une surface opposée desdits moyens de tête (29) d'une façon empêchant la rotation et le va-et-vient axial dudit élément de bobine par rapport au reste desdits moyens de tête (29).

20. Dispositif selon la revendication 18
dans lequel : lesdits moyens de régulation comprennent un élément de régulation (104) supporté par lesdits moyens de tête (29) de façon à pouvoir se déplacer par rapport à ceux-ci sous l'effet de ladite force centrifuge de référence (F2) et de ladite force antagoniste (F3) entre lesdites première et seconde positions, ledit élément de régulation (104) comprenant une partie (130) qui, lorsque ledit élément de régulation (104) est dans la seconde position, peut se mettre en prise avec une partie de ladite bobine (65) d'une façon empêchant sa rotation par rapport au reste desdits moyens de tête (29).

21. Dispositif selon les revendications 18 et 19
dans lequel : lesdits moyens pour provoquer simultanément la rotation et le va-et-vient axial de ladite bobine (65) comprennent des premiers moyens de came coopérant (84) sur une extrémité de ladite bobine (65) et une première partie de surface opposée (30, 92) du reste desdits moyens de tête (29) et des seconds moyens de came coopérant (88) sur l'extrémité opposée de ladite bobine (65) et une seconde partie de surface opposée (94, 96) du reste desdits moyens de tête (29), lesdits premiers et seconds moyens de came coopérant (84, 88) fonctionnant alternativement pendant la rotation de ladite bobine (65) par rapport au reste desdits moyens de tête (29) pour provoquer un va-et-vient vertical de ladite bobine (65) par rapport au reste desdits moyens de tête (29).

22. Dispositif selon la revendication 21
dans lequel lesdits premiers et seconds moyens de came coopérant comprennent :
un premier ensemble de dents de came espacées périphériquement (84) formées sur ladite une extrémité de ladite bobine (65),
un second ensemble de dents de came espacées périphériquement (92) formées sur ladite première partie de surface,
un troisième ensemble de dents de came espacées périphériquement (88) formées sur ladite extrémité opposée de ladite bobine (65), et
un quatrième ensemble de dents de came espacées périphériquement (96) formées sur ladite seconde partie de surface,
lesdits premier et troisième ensembles de dents de came (84, 86) étant en alignement périphérique les unes avec les autres,
lesdits second et quatrième ensembles de dents de came (92, 96) étant en désalignement périphérique les unes avec les autres.

23. Dispositif selon la revendication 16
dans lequel : lesdits moyens de frein (222, 226, 236) servent, lorsqu'ils sont débloqués, à créer par frottement ladite force de retenue sur ledit fil (212) et servent, lorsqu'ils sont bloqués, à empêcher par frottement que ladite force centrifuge de déroulement (F1) provoque le déroulement du fil.

24. Dispositif selon la revendication 23
dans lequel : lesdits moyens de frein comprennent des moyens (222, 236) pour pincer le fil (212) entre une partie desdits moyens de régulation (230) et une partie (222) desdits moyens de tête (200) lorsque lesdits moyens de régulation (230) sont dans chacune desdites première et seconde positions.

25. Dispositif selon la revendication 24
dans lequel : lesdits moyens de régulation comprennent un élément de régulation (230) supporté par lesdits moyens de tête (200, 220) de façon à pivoter par rapport à ceux-ci entre lesdites première et seconde positions, ledit élément de régulation (230) ayant une surface de came qui forme ladite partie desdits moyens de régulation et qui est configurée de façon à exercer une force de pincement variable sur le fil lorsque ledit élément de régulation pivote entre lesdites première et seconde positions.

26. Dispositif selon la revendication 25
dans lequel : ladite force de pincement lorsque ledit élément de régulation (230) est dans ladite première position, est inférieure à ladite force de pincement lorsque ledit élément de régulation (230) est dans ladite seconde position.

27. Dispositif selon la revendication 15
dans lequel : ladite bobine (65) peut tourner par rapport au reste desdits moyens de tête (29) pendant le déroulement du fil, et
ledit dispositif comprend de plus des moyens (80, 130) pour immobiliser ladite bobine (65) en rotation par rapport au reste desdits moyens de tête (29) lorsque la vitesse de rotation desdits moyens de tête (29) est inférieure à une vitesse de rotation prédéterminée.

28. Dispositif selon la revendication 27
dans lequel : lesdits moyens pour immobiliser ladite bobine (65) comprennent un élément de verrouillage (68, 104) pouvant se déplacer par centrifugation sous l'effet de la rotation desdits moyens de tête à ladite vitesse de rotation prédéterminée d'une première position dans laquelle ledit élément de verrouillage (80, 130) est en prise avec ladite bobine (65) et empêche sa rotation par rapport au reste desdits moyens de tête (29), en une seconde position dans laquelle ledit élément de verrouillage (80, 130) est libéré dudit élément de bobine.

29. Dispositif selon la revendication 15
dans lequel : ladite bobine (65) est supportée par le reste desdits moyens de tête de façon à pouvoir être retirée axialement de ceux-ci, ladite bobine (65) ayant une partie d'extrémité centrée radialement faisant saillie axialement qui s'élargit radialement à son extrémité extérieure de façon à pouvoir être saisie et tirée aisément pour faciliter l'enlèvement axial de ladite bobine (65) lorsqu'il est souhaité.
